# EUROPÄISCHE PATENTANMELDUNG

(11) **EP 0 616 249 A1**
(43) Veröffentlichungstag der Anmeldung: **21.09.1994**
(21) Anmeldenummer: 94103574.3
(22) Anmeldetag: 09.03.1994
(51) Int. Cl.: G03B 27/52, G06K 9/26

(54) **Vorrichtung zum Abtasten von Bildoriginalen und zum Belichten von Trägermaterial**

(30) Priorität: 13.03.1993 CH 759/93
(71) Anmelder: LÜSCHER AG MASCHINENBAU, CH-5725 Leutwil (CH)
(72) Erfinder: Berner, Peter, CH Rupperswil (CH)
(74) Vertreter: White, William

(57) **Zusammenfassung**

Es soll nun eine Vorrichtung geschaffen werden, bei der keine hohen Belastungen durch natürliche oder künstliche Gewichte für die Dämpfung von Schwingungen aus dem Untergrund oder von der Maschine kommend auf den Boden drücken. Mit der aber absolut genau und mit der verlangten Bildauflösung oder sogar mit höherer Bildauflösung wenn entsprechende Aufnahme und/oder Wiedergabegeräte vorhanden sind, gearbeitet werden kann.
Eine das abzutastende Bild oder das Filmmaterial tragende rotierende Trommel (1) mit Antrieb (12) und mit radial zur Trommel (1) arbeitenden Lese- und Wiedergabeköpfen (2), sind in einem Rahmen (3) montiert, und der Rahmen (3) ist mittels Schwingungsdämpfern (50a,50b,50c,50d) auf einem Gestell (4) befestigt ist. Damit kann der Rahmen (3) frei und nur durch die Schwingungsdämpfer (50a,50b,50c,50d) gedämpft schwingen. Insbesondere schwingen so die Trommel (1) und das optische Lese- und Wiedergabegerät (2) starr zusammen und es ergeben sich keine Bildpunktveränderungen durch eine allfällige unbeherrschbare, infinitesimale Schwingung.

## Beschreibung

Die vorliegende Erfindung betrifft eine Vorrichtung zum Abtasten von Bildoriginalen und zum und Belichten von mit lichtempfindlichem Material beschichtetem Trägermaterial mit einer rotierenden, das Bildoriginal tragenden Trommel mit Antrieb und mit radial zur Trommel wirkenden Lese- und Wiedergabeköpfen.

Für die Textilherstellung werden graphisch hochwertige Muster von Künstlern hergestellt. Diese Muster können relativ klein, etwa 50 x 50 cm, sein aber auch gross sein,z.B. 100 x 200 cm. Die Bildpunkte, die rechteckig, kreisförmig oder elliptisch sein können, werden mit 25 bis 200 Linien pro Zoll (lpi) abgetastet was bedeutet, dass mit einer Auflösung von 3200 Bildpunkten pro Quadratzoll (ppi) gearbeitet wird. Diese sehr feine Auflösung bedingt, dass die Vorlage und auch das Lesegerät beziehungsweise dann auch das Belichtungsgerät mit allergrösster Präzision ruhig gehalten werden müssen und keinerlei Schwingungen oder Schwankungen unterworfen werden dürfen.

Dies wurde von der Firma BARCO GRAPHICS in Gent; Belgien dadurch gelöst, dass die Vorlage oder der Film mit Unterdruck auf einer rotierenden Trommel festgehalten wird und das optische System auf einem Luftkissen über einem Granitblock schwebt. Durch eine solche Anordnung soll angeblich jegliche Reibung und Abnutzung an den kritischen Stellen des Systems vermieden werden. Der angesprochene Granitblock wiegt um die 4000 kg. Dadurch wird aber das Gerät sehr schwer transportierbar und kann, infolge der hohen Belastung nicht irgendwo in einem Betrieb aufgestellt werden, sondern nur dort, wo die Bodenbelastung es zulässt.

Dementsprechend ist es eine Aufgabe der Erfindung eine Vorrichtung der Eingangs erwähnten Art zu schaffen, bei der keine derart hohen Belastungen auf dem Boden liegen, mit dem aber absolut genau mit der verlangten Bildauflösung oder sogar mit höherer Bildauflösung wenn entsprechende Aufnahme und/oder Wiedergabegeräte vorhanden sind, gearbeitet werden kann.

Erfindungsgemäss wird dies dadurch erreicht, dass die Trommel mit ihrem Antrieb und die Lese- und Wiedergabeköpfe gemeinsam in einem Rahmen montiert sind, und der Rahmen mittels Schwingungsdämpfern auf einem Gestell befestigt ist.

Diese Anordnung hat sich in längeren Versuchen als sehr Vorteilhaft erwiesen. Einesteils kann der Rahmen sehr massiv gebaut seid so dass er alle Kräfte der Trommel und der sich verschiebenden optischen Teile aufnehmen kann. Durch den Einbau von Schwingungsdämpfern zwischen dem Rahmen und einem Traggestell kann der Rahmen frei schwingen und mit ihm sowohl die Trommel wie auch alle optischen Teile und deren Führungen.

Damit bleiben die relativen Lagen der verschiedenen Teile für die Abtastung und Belichtung mit der Trommel zusammen absolut konstant und können keine störenden Schwingungen ausführen. Der schwere Granitblock ist auch nicht notwendig und das Gestell kann auf jeden Boden gestellt werden, ohne dass auf die Bodenbelastung Rücksicht zu nehmen ist. Überdies kann die Trommel einen Durchmesser von bis 70 cm und mehr haben, weil allfällige Schwingungen infolge von Versteifungsmitteln oder dergleichen keinen Einfluss haben können, weil das ganze System ohnehin frei schwingen kann.

Die Unwuchtkräfte auf die Trommel sind ohnehin gross, wenn man bedenkt, dass eine Drehzahl von 200 U/min vorgesehen sind und wenn das abzutastende Bild oder Muster z.B. auf einen stabilen Karton oder ein anderes stabiles Material aufgezeichnet oder aufgemalt ist und dieser Karton dann nicht den ganzen Umfang der Trommel umfasst, sondern nur etwa einen Viertel oder weniger.

Nachfolgend wird ein Ausführungsbeispiel der Erfindung an Hand der Zeichnung erläutert. es zeigen:
- Fig.1: eine Frontalansicht dar erfindungsgemässen Vorrichtung mit entfernten Abdeckungen und entfernter Wanne,sowie mit vertikal geschnittener Trommel, und

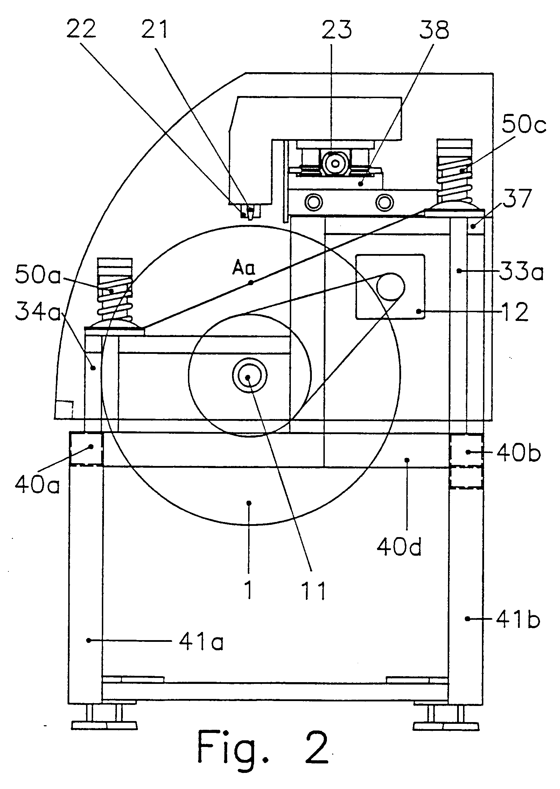

- Fig.2: eine Seitenansicht der Vorrichtung nach Fig.1 von rechts in der Zeichnung betrachtet, ohne die Seitenwand.

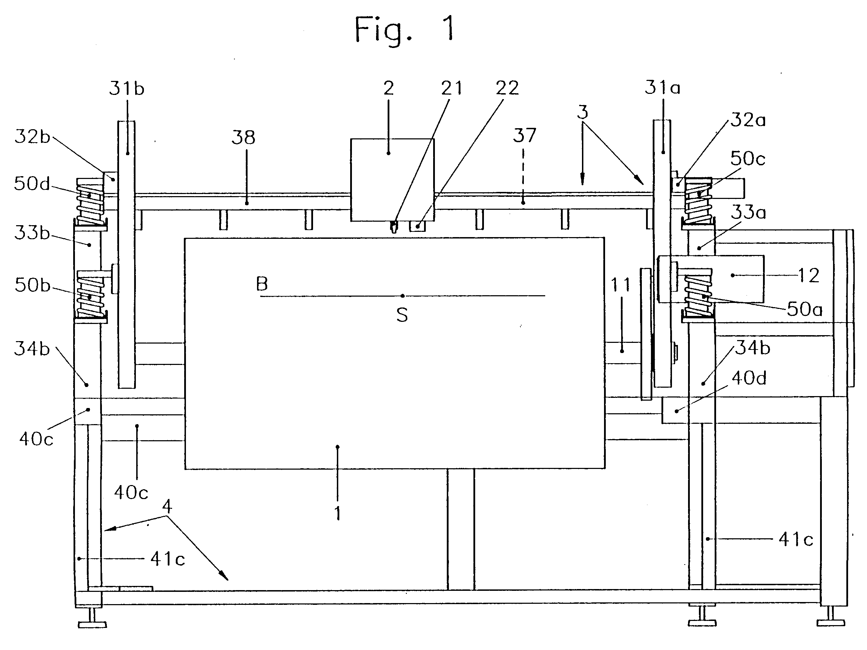

Die Vorrichtung zum Abtasten von Vorlagen und zum Belichten eines Films besteht im wesentlichen aus einer Trommel 1 mit horizontal angeordneter Antriebswelle 11, sowie mit einem optischen Lese- und Wiedergabegerät 2, mit einer Leseoptik 21 und einer Belichtungsoptik 22. Die Trommel 1 und das optische Gerät 2 sind in einem Rahmen 3 untergebracht. Dieser Rahmen 3 umfasst links und rechts in der Fig.1 je eine Seitenwand 31a und 31b, die über einen hinteren Jochträger 37 verbunden sind. Vorne befindet sich eine Verschiebeantriebswelle 24, z. B. eine Gewindestange und im Läufer 23 des optische Lese- und Wiedergabegerätes 2 sind Umlaufkugellager enthalten, so dass eine gleichmässige und ruhige Verschiebung erhalten wird. Neben der Lagerung der Antriebswelle 11 ist natürlich auch die Verschiebeantriebswelle 23 in den Seitenwänden 31a,31b gelagert. Der Antriebsmotor mit Getriebe 12 ist ebenfalls an der einen Seitenwand 31a befestigt.

Der Rahmen 3 ist über Stossdämpfer 50a,50b,50c,50d auf einem Gestell 4 abgestutzt. Dieses Gestell besteht im wesentlichen aus vier vertikalen Tragstützen 41a,41b,41c,41d die an ihrem oberen Ende mit Jochträgern 40a,40b und Querträgern 40a,40b untereinander starr verbunden sind. Auf diesem Rahmengeviert sind ein Paar hintere lange Stützen 33a,33b und vordere kurze Stützen 34a,34b abgestützt und auf diesen vier Stützen 33a,33b,34a,34b ruhen die vier genannten Stossdämpfer auf. Diese Stossdämpfer sind kopfseitig über Tragstützen 35a,35b,35c,35d an den beiden Seitenwänden 31a,31b befestigt. Somit ist der Rahmen 3 auf dem Gestell 4 freischwingend aufgehängt.

Dies bewirkt, dass die Trommel 1 und das optische Lese- und Wiedergabegerät 2 gemeinsam freischwingend auf dem Gestell aufgebaut sind. Irgendwelche Erschütterungen im Boden werden nicht auf den Rahmen 3 übertragen und umgekehrt werden die Schwingungen des aus Trommel 1 und Lese- und Wiedergabegerät 2 bestehenden optischen Teils nicht auf das Gestell 4 übertragen. Das bedeutet, dass das Gestell nicht im Boden verankert sein muss und ebensowenig, dass es durch Naturstein oder Betonklötze belastet sein muss, sondern dass das Gesamtgewicht nur durch das verwendete Material für das Gestell 4 und den Rahmen 3, das ausser der Festigkeit keine anderen Funktionen auszuüben hat, bestimmt ist.

Es hat sich bei den Versuchen noch gezeigt, dass beim Anfahren der Trommel 1, die sich immerhin mit einer Drehzahl von 200 U/min dreht, einen starken Anfangsimpuls erzeugt, der einen starken Schlag auf das gesamte Schwingsystem ausübt. Dieser Schlag kann nun ebenfalls gedämpft werden, wenn die vorderen Stossdämpfer 50a und 50b tiefer angeordnet sind als die hinten befindlichen Stossdämpfer 50c und 50d. Der Höhenunterschied wurde so gewählt, dass die Fusspunktverbindungsgeraden Aa, Ab, der jeweiligen Stossdämpferpaare links und rechts der Trommel 1 die horizontale Gerade B durch den Schwerpunkt S des ganzen Schwingsystems, schneiden.

## Patentansprüche

1. Vorrichtung zum Abtasten von Bildoriginalen und zum und Belichten von mit lichtempfindlichem Material beschichtetem Trägermaterial mit einer rotierenden das Bildoriginal tragenden Trommel (1) mit Antrieb (12) und mit radial zur Trommel wirkenden Lese- und Wiedergabeköpfen (2), **dadurch gekennzeichnet**, dass die Trommel (1) mit ihrem Antrieb (12) und die Lese- und Wiedergabeköpfe (2) in einem Rahmen (3) montiert sind, und dass der Rahmen (3) mittels Schwingungsdämpfern (50a,50b,50c,50d) auf einem Gestell (4) befestigt ist.

2. Vorrichtung nach Anspruch 1, **dadurch gekennzeichent**, dass der Rahmen im wesentlichen aus zwei sehr stabilen Seitenwänden (31a,31b) mit einem diese statisch stabil verbindenden Jochträger (37) besteht, dass die Antriebswelle (11) der Trommel (1) und die Verschiebewelle (23) für das optische Lese- und Wiedergabegerät (2) in den beiden Seitenwänden (31a,31b) gelagert sind, und dass die eine Seitenwand (31a) den Antriebsmotor mit Getriebe (12) trägt.

3. Vorrichtung nach Anspruch 1 oder 2, **dadurch gekennzeichnet**, dass als Schwingungsdämpfer (50a,50b,50c,50d) eine Druckfeder mit zentral angeordnetem Dämpfermittel vorgesehen ist.

4. Vorrichtung nach Anspruch 3, **dadurch gekennzeichnet**, dass die Schwingungsdämpfer (50a,50b,50c,50d) mechanische Absorptionsdämpfer sind.

5. Vorrichtung nach einem der vorangehenden Ansprüche 1 bis 4, **dadurch gekennzeichnet**, dass die Schwingungsdämpfer (50a,50b,50c,50d) paarweise an jeder Seitenwand (31a,31b) des Rahmens (3) angeordnet sind.

6. Vorrichtung nach Anspruch 4, **dadurch gekennzeichnet**, dass die Verbindungslinie (Aa,Ab) der Fusspunkte der Schwingungsdämpfer (50a,50b,50c,50d) bei jeder Seitenwand (31a,31b) die horizontale Gerade (B) durch den Schwerpunkt (S) des Schwingsystems schneidet.
